Europäisches Patentamt

European Patent Office

Office européen des brevets

(19)

(11) Veröffentlichungsnummer : **0 354 163 B1**

# (12) EUROPÄISCHE PATENTSCHRIFT

(45) Veröffentlichungstag der Patentschrift :
**11.11.92 Patentblatt 92/46**

(51) Int. Cl.$^5$ : **B60H 1/00**

(21) Anmeldenummer : **89710051.7**

(22) Anmeldetag : **08.06.89**

(54) **Vorrichtung zum Beheizen des Fahrgastraumes eines Kraftfahrzeuges.**

(30) Priorität : **11.07.88 DE 3823448**

(43) Veröffentlichungstag der Anmeldung :
**07.02.90 Patentblatt 90/06**

(45) Bekanntmachung des Hinweises auf die
Patenterteilung :
**11.11.92 Patentblatt 92/46**

(84) Benannte Vertragsstaaten :
**DE ES FR IT**

(56) Entgegenhaltungen :
**EP-A- 0 216 104**
**DE-A- 3 338 768**
**DE-A- 3 608 524**
**DE-A- 3 635 246**
**DE-U- 6 929 387**
**DE-U- 7 440 007**

(73) Patentinhaber : **ROBERT BOSCH GMBH**
**Postfach 30 02 20**
**W-7000 Stuttgart 30 (DE)**

(72) Erfinder : **Scheidel, Wolfgang, Ing. grad.**
**Thomas-Mann-Strasse 9**
**W-7580 Bühl (DE)**
Erfinder : **Meier, Trudpert, Dipl.-Ing. (FH)**
**Kappelwindeckstrasse 30**
**W-7580 Bühl (DE)**
Erfinder : **Schicht, Horst, Ing. grad.**
**Greifswalderstrasse 9**
**W-3170 Gifhorn (DE)**
Erfinder : **Schlepper, Hans, Ing. grad.**
**Friedrich-Naumann-Strasse 14**
**W-3180 Wolfsburg 1 (DE)**

EP 0 354 163 B1

## Beschreibung

### Stand der Technik

Die Erfindung geht aus von einer Heizvorrichtung nach der Gattung des Hauptanspruchs. Es sind schon solche Heizvorrichtungen bekannt (DE-A-36 08 524 und DE-A-33 38 768), bei denen die im Zwischenkanal befindliche Luft eine vorgewählte Temperatur hat. Insbesondere wenn diese Luft maximal erwärmt ist, weil dies bespielsweise wegen der herrschenden Witterung erforderlich ist, kann die aus der Blasdüse des Zwischenkanals austretende Luft zu einer Überhitzung des Kopfraumes im Fahrgastraum des Kraftfahrzeuges führen, wenn die von den Seitenkanälen gespeisten Düsen weiter vom Wärmetauscher entfernt sind als die Blasdüse des Zwischenkanals. In der Praxis wird nämlich an den Zwischenkanal die auf die Vordersitze des Fahrzeuges gerichtete Hauptdüse angeschlossen, während die Seitenkanäle zu auf die Scheiben gerichteten seitlichen Defrosterdüsen führen oder im Fußraum, insbesondere im Fond des kraftfahrzeuges münden. Durch die erheblichen Längenunterschiede zwischen den einzelnen Kanälen kommt es zu den unerwünschten Temperaturdifferenzen an den verschiedenen Düsen.

Der Erfindung liegt somit die Aufgabe zugrunde, eine einfache Möglichkeit zu schaffen, durch welche die Temperatur der zur Hauptdüse strömenden Luft gegenüber der Temperatur der in den Seitenkanälen strömenden Luft gesenkt werden kann.

### Vorteile der Erfindung

Die erfindungsgemäße Heizvorrichtung mit den kennzeichnenden Merkmalen des Hauptanspruchs hat demgegenüber den Vorteil, daß auf einfache Weise, ohne besondere Kühl-Mischluftkanäle, welche im Bedarfsfall zu dem Zwischenkanal geöffnet werden müßten, die Temperatur der aus der Blasdüse entströmende Luft deutlich niedriger ist als die aus den anderen Düsen austretende Luft. Eine Überhitzung des Kopfraumes wird dadurch zuverlässig vermieden.

Durch die in den Unteransprüchen aufgeführten Maßnahmen sind vorteilhafte Weiterbildungen und Verbesserungen der im Hauptanspruch angegebenen Heizvorrichtung möglich.

### Zeichnung

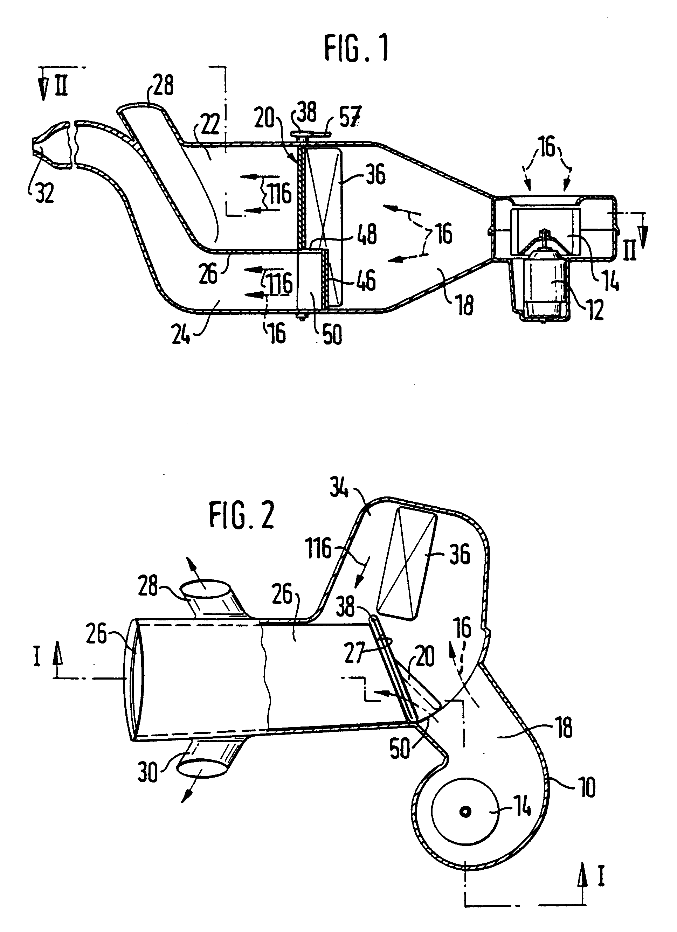

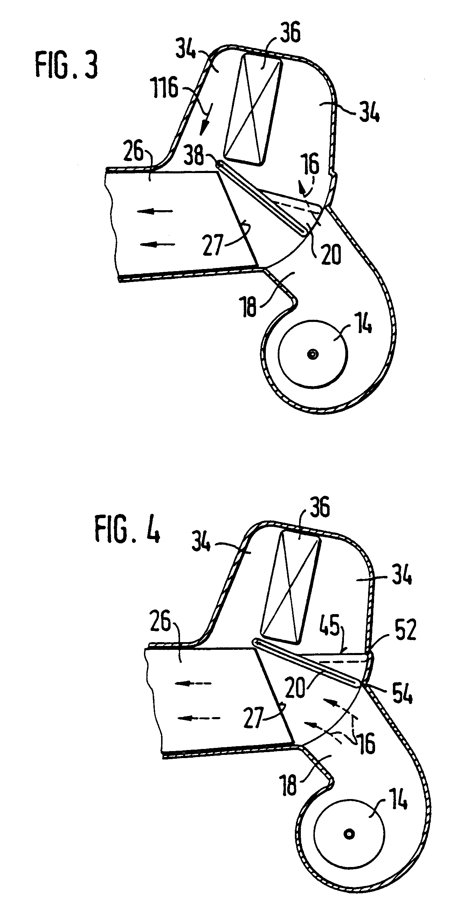

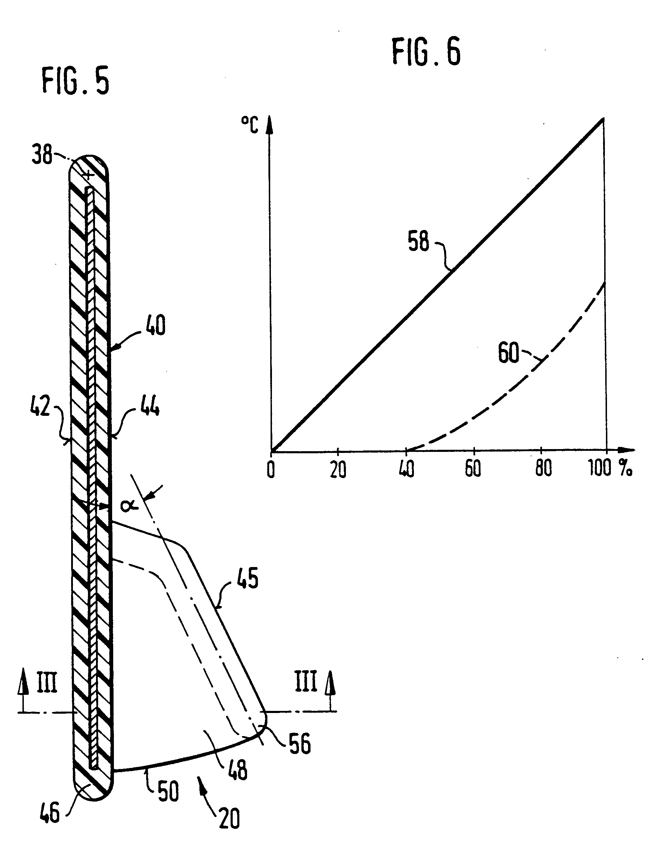

Ein Ausführungsbeispiel der Erfindung ist in der Zeichnung dargestellt und in der nachfolgenden Beschreibung nähe erläutert. Es zeigen Figur 1 einen Längsschnitt durch eine Heizvorrichtung, entlang einer in Figur 2 mit I-I bezeichneten Schnittlinie, Figur 2 einen Teilschnitt durch die Heizvorrichtung gemäß Figur 1, entlang der Linie II-II, bei der sich das Leitelement in seiner einen Endstellung befindet, Figur 3 eine Teildarstellung der Heizvorrichtung gemäß Figur 2, bei der sich das Leitelement in einer Zwischenstellung befindet, Figur 4 eine andere Teildarstellung der Heizvorrichtung gemäß Figur 2, bei der sich das Leitelement in seiner anderen Endstellung befindet, Figur 5 das Leitelement im Schnitt, entlang der Linie II-II in Figur 1 gesehen, in vergrößerter Darstellung und Figur 6 ein Schaubild, welches die Austrittstemperatur der aus verschiedenen Düsen austretenden Luft in Abhängigkeit von Betriebsstellung des Leitelements darstellt.

### Beschreibung des Ausführungsbeispiels

Eine in Figur 1 dargestellte Vorrichtung zum Beheizen des Fahrgastraumes eines nicht näher dargestellten Kraftfahrzeuges weist ein Gehäuse 10 auf, in welchem eine Lüftereinheit mit einem elektrischen Antriebsmotor 12 und einem Lüfterrad 14 untergebracht ist. Im Betrieb fördert die Lüftereinheit 12, 14 aus der Umgebung angesaugte Frisch- oder Umluft (Pfeile 16) durch das Gehäuse 10. Dabei gelangt diese Frischluft zunächst in einen Hauptkanal 18 und von dort aus, je nach Stellung eines Leitelements 20 in einen Zwischenkanal, der dem Hauptkanal 18 nachgeordnet ist. Der Zwischenkanal selbst ist beim Ausführungsbeispiel in zwei übereinliegende Teil-Zwischenkanäle 22 und 24 unterteilt. Dies wird durch eine Trennwand 26 erreicht, die insbesondere in Figur 1 ersichtlich ist. Der oben liegende Teil-Zwischenkanal 22 geht in Seitenkanäle 28 und 30 über. Der unten liegende Teil-Zwischenkanal 24 führt zu einer Blasdüse 32, welche in den nicht näher dargestellten Fahrgastraum des kraftfahrzeuges mündet und dort vorzugsweise auf die vorderen Sitzplätze gerichtet ist. Die Seitenkanäle 28 und 30 führen zu nicht dargestellten Scheiben-Defrosterdüsen bzw. zu in einem Fußraum des Fahrgastraums angeordneten Blasdüsen. Innerhalb des Gehäuses 10 befindet sich noch ein Zweigkanal 34, in welchem ein Wärmetauscher 36 angeordnet ist. Bei entsprechender Stellung des Luft-Leitelements 20 wird der Luftstrom durch den Zweigkanal 34 über den Wärmetauscher 36 geleitet, wo er in Strömungsrichtung der Luft gesehen hinter dem Wärmetauscher 36 in den Zwischenkanal 22 bzw. 24 eintritt. Das Luftleitelement ist als Klappe 20 ausgebildet, die um eine Schwenkachse 38 zwischen zwei Endstellungen bewegbar ist. Die eine Endstellung der Schwenkklappe 20 ist in Figur 2 dargestellt, während die andere Endstellung der Klappe 20 aus Figur 4 ersichtlich ist. Die Schwenkklappe 20 ist in jeder der beiden Endstellungen sowie in jeder beliebigen Zwischenstellung festsetzbar. Eine dieser möglichen Zwischenstellungen ist in Figur 3 dargestellt. In der in Figur 2 dargestellten Endstellung schlägt die Klappe 20 an der ihr zugewandten Stirnseite 27 der Trennwand 26 an. Weiter ist aus der Zeichnung ersichtlich, daß sich die Schwenkachse 38 der Luftleitklappe 20 quer dem durch die später näher beschriebenen, die Strömungsrichtung der Luft angebenden Pfeile erstreckt. Die Luftleitklappe 20 weist einen im wesentlichen plattenförmigen Bereich 40 auf, der mit seiner einen Oberfläche 42 an der Stirnfläche 27 der Trennwand 26 zur Anlage kommt.

An ihrer von der Zwischenwand 26 abgewandten Plattenseite 44 weist die Luftleitklappe 20 einen gegenüber der Klappenebene versetzten Abschnitt 45 auf, der bei an der Trennwand 26 anschlagender Klappe 20 aus der von der Trennwand abgewandten Fläche 44 der Klappe 20 vorspringt. Der Versatz des vorspringenden Abschnitts 45 ist etwa so ausgelegt, daß er im Mittelbereich zwischen der Klappen-Schwenkachse 38 und dem freien Ende 46 der Klappe 20 in diese übergeht. Beim Ausführungsbeispiel ist der Versatzwinkel $\alpha$ des Abschnitts 45 gegenüber der Plattenebene etwa mit 30 Grad festgelegt worden. Wie insbesondere die Figuren 1 und 5 zeigen, ist der vorspringende Abschnitt 45 der Klappe 20 mit dieser über eine Deckplatte 48 verbunden, die sich in einer Verlängerungsebene der Trennwand 26 befindet. In Draufsicht (Figur 5) ergibt sich in der Leitklappe 20 eine sogenannte Hutze 50, welche bei einer entsprechenden Betriebsstellung der Luftleitklappe 20 in der Lage ist, einen Teil-Luftstrom aus dem Hauptkanal 18 abzuschöpfen und in eine andere Richtung zu leiten. In der in Figur 4 gezeigten Betriebsstellung der Luftleitklappe 20 sind dieser im Bereich des Zweigkanals am Gehäuse befindliche Anschlagschultern 52 und 54 zugeordnet. In dieser Betriebsstellung schlägt die Luftleitklappe 20 mit ihrem freien Ende 45 an der Schulter 54 an, während das freie Ende 56 des vorspringenden Abschnitts 45 an der Anschlagschulter 52 zur Anlage kommt. Weiter ist aus Figur 1 ersichtlich, daß die Luftleitklappe 20 über einen Bedienungshebel 57 tätigbar ist, d. h. um ihre Schwenkachse 38 bewegt werden kann.

Im folgenden sei der Betrieb der Heizvorrichtung in der in abgebildeten Figuren 1 und 2 dargestellten Betriebsstellung der Luftleitklappe erläutert. Die von dem Gebläse 12, 14 angesaugte Frischluft (dargestellt durch die gestrichelt gezeichneten Pfeile 16), wird danach über den Hauptkanal 18 und die Luftleitklappe 20 in den Zweigkanal 34 geleitet, wo sie durch den Wärmetauscher 36 erwärmt wird. Die erwärmte Luft ist nun durch ausgezogen gezeichnete Pfeile dargestellt und mit 116 bezeichnet. Die erwärmte Luft 116 gelangt beim Eintritt in den Zwischenkanal sowohl in den oberen Teil-Zwischenkanal 22 als auch in den unteren Teil-Zwischenkanal 24. Im Übergangsbereich zwischen dem Hauptkanal 18 und dem Zweigkanal 34 schöpft jedoch die Hutze 50 der Luftleitklappe 20 ein Teil der Frischluft 16 ab und führt diesen auf direktem Weg in den unteren Teil-Zwischenkanal 24. Diese Frischluft ist in Figur 1 im Teil-Zwischenkanal 24 ebenfalls mit 16 bezeichnet worden. Da die Höhe der Hutze 50 der Höhe des unteren Teil-Zwischenkanals 24 entspricht, gelangt die abgeschöpfte Frischluft 16 ausschließlich in den unteren Teil-Zwischenkanal 24, während der obere Teil-Zwischenkanal 22 ausschließlich von der durch den Wärmetauscher 36 erwärmten Warmluft 116 durchströmt wird. Es ist klar, daß die im Teil-Zwischenkanal 24 strömende Luft eine deutlich niedrigere Temperatur hat als die im Teil-Zwischenkanal 22 strömende Luft, welche über die Seitenkanäle 28 zu den anderen Düsen gelangt. Dies wird dadurch erreicht, daß das Leitelement 20 in seiner den Zweigkanal 34 mit dem Hauptkanal 18 verbindenden Betriebsstellung (Figur 2) einen Durchgang, nämlich die Hutze 50 erhält, wobei der andere, obere Teil-Zwischenkanal 22 gesperrt ist und nur über den Zweigkanal 34 mit erwärmter Luft 116 beschickt werden kann.

In der in Figur 3 gezeigten Betriebsstellung der Luftleitklappe 20 strömt ein geringer Anteil Frischluft 16 über den Zweigkanal 34, wo sie durch den Wärmetauscher 36 erwärmt wird. Der größte Teil der Luft wird durch die Luftleitklappe 20 direkt in den Zwischenkanal 22, 24 geleitet, von wo aus sie über die Seitenkanäle 28 bzw. über die Blasdüse 32 in den Fahrgastraum des Kraftfahrzeuges gelangt. Bei der in Figur 4 gezeigten Betriebsstellung ist der Zweigkanal völlig gesperrt, so daß die Frischluft 16 vom Hauptkanal 18 aus direkt in den Zwischenkanal 22, 24 und von dort aus zu den ihm zugeordneten Blasdüsen gelangt.

Bei dem in Figur 6 dargestellten Schaubild ist auf der Ordinate die Ausblastemperatur angegeben, während auf der Abszisse der Schwenkwinkel der Luftleitklappe in Prozent angegeben ist. Die durchgezogene Linie 58 zeigt dabei den Temperaturverlauf der aus dem Teil-Zwischenkanal 22 gespeisten Düsen, während die gestrichelte Kurve 60 den Temperaturverlauf der aus der Blasdüse 32 austretenden Luft veranschaulicht. Es ist leicht erkennbar, daß die Temperatur der aus der Blasdüse 32 austretenden Luft gegenüber der Temperatur der aus den anderen Düsen austretenden Luft klar zurückbleibt.

**Patentansprüche**

1. Vorrichtung zum Beheizen des Fahrgastraumes eines kraftfahrzeuges, mit einem von Luft durchströmten Hauptkanal (18), einem diesem nachgeordneten Zwischenkanal (22, 24), von dem mit dem Fahrgastraum verbundene Seitenkanäle (28, 30) abzweigen, mit einem vom Hauptkanal (18) über einen Wärmetauscher (36) führenden Zweigkanal (34), der mit Hilfe eines zwischen zwei Endstellungen bewegbaren und festsetzbaren Leitelements (20) für die Luft an den Hauptkanal anschließbar und von diesem trennbar ist, und der in Strömungsrichtung der Luft gesehen hinter dem Wärmetauscher (36) in den Zwischenkanal (22, 24) eintritt, wobei der Zwischenkanal (22, 24) an eine in den Fahrgastraum mündende Blasdüse (32) angeschlossen ist, wobei der Zwischenkanal (22, 24) geteilt ist, von denen ein Teil-Zwischenkanal (24) mit der Blasdüse (32) verbunden ist und ein anderer Teil-Zwischenkanal (22) in die Seitenkanäle (28, 30) übergeht, dadurch gekennzeichnet, daß das Leitelement (20) in einer den Zweigkanal (34) mit dem Hauptkanal (18) verbindenden Betriebstellung einen Durchgang (50) zu dem einen Teilkanal (24) offenhält und den anderen Teilkanal (22) sperrt.

2. Vorrichtung nach Anspruch 1, dadurch gekennzeichnet, daß der Zwischenkanal (22, 24) eine in Strömungsrichtung der Luft ausgerichtete Trennwand (26) zur Bildung der Teil-Zwischenkanäle (22 bzw. 24) aufweist, die sich bis zum Bewegungsbereich des Leitelements (20) erstreckt.

3. Vorrichtung nach einem der Ansprüche 1 oder 2, dadurch gekennzeichnet, daß das Leitelement als in der einen Endstellung an der Trennwand (26) anschlagende, schwenkbare Klappe (20) ausgebildet ist, deren Schwenkachse (38) quer zum Luftstrom angeordnet ist.

4. Vorrichtung nach Anspruch 3, dadurch gekennzeichnet, daß die Klappe (20) an ihrem mit dem einen Teil-Zwischenkanal (24) zusammenarbeitenden Bereich einen gegenüber der Klappenebene versetzten Abschnitt (45) aufweist, der bei an der Trennwand (26) anschlagender Klappe (20) aus der von der Trennwand (26) abgewandten Fläche (44) der Klappe (20) vorspringt.

5. Vorrichtung nach Anspruch 4, dadurch gekennzeichnet, daß der Abschnitt (45) gegenüber dem übrigen Bereich der Klappe (20) um etwa 30 Grad vorspringt.

6. Vorrichtung nach einem der Ansprüche 4 oder 5, dadurch gekennzeichnet, daß der Abschnitt (45) im Mittelbereich zwischen Klappenschwenkachse (38) und dem freien Ende (46) der Klappe (20) in diese übergeht.

7. Vorrichtung nach einem der Ansprüche 4 bis 6, dadurch gekennzeichnet, daß der vorspringende Abschnitt (45) der Klappe (20) mit dieser über eine Deckplatte (48) verbunden ist.

8. Vorrichtung nach Anspruch 7, dadurch gekennzeichnet, daß sich die Deckplatte (48) in einer Verlängerungsebene der Trennwand (26) befindet.

9. Vorrichtung nach einem der Ansprüche 1 bis 8, dadurch gekennzeichnet, daß dem Leitelement (20) in seiner den Zweigkanal (34) vom Hauptkanal (18) trennenden Betriebsstellung eine im Bereich des Zweigkanal (34) befindliche Anschlagschulter (52, 54) zugeordnet ist.

10. Vorrichtung nach Anspruch 9, dadurch gekennzeichnet, daß sowohl dem freien Ende (56) des versetzten Abschnitts (45) der Klappe (20) als auch dem freien Ende (46) des übrigen Bereichs (40) der Klappe je eine Anschlagschulter (52 bzw. 54) zugeordnet ist.

11. Vorrichtung nach einem der Ansprüche 1 bis 10, dadurch gekennzeichnet, daß die Blasdüse (32) auf wenigstens einen der vorderen Sitzplätze des kraftfahrzeuges gerichtet ist.

## Claims

1. Device for heating the passenger compartment of a motor vehicle, having a main duct (18) which is flowed through by air, an intermediate duct (22, 24) which is located downstream thereof and from which side ducts (28, 30) connected to the passenger compartment branch off, having a branch duct (34) which runs from the main duct (18) via a heat exchanger (36) and can be connected to the main duct by means of a guide element (20) for the air, which element is capable of being moved and fixed in place between two end positions, and is separable from the main duct, and which, viewed in the direction of flow of the air, enters behind the heat exchanger (36) into the intermediate duct (22, 24), the intermediate duct (22, 24) being connected to a blower nozzle (32) opening out into the passenger compartment, the intermediate duct (22, 24) being divided, one sub-intermediate duct (24) of which being connected to the blower nozzle (32) and another sub-intermediate duct (22) of which merging into the side ducts (28, 30), characterised in that the guide element (20), in an operating position connecting the branch duct (34) to the main duct (18), keeps open a passage (50) to the one sub-duct (24) and blocks the other sub-duct (22).

2. Device according to Claim 1, characterised in that the intermediate duct (22, 24) exhibits a partition (26), aligned in the direction of flow of the air, for the formation of the sub-intermediate ducts (22 or 24), which partition extends as far as the range of movement of the guide-element (20).

3. Device according to one of Claims 1 or 2, characterised in that the guide element is configured as a pivotable flap (20) which butts in the one end position against the partition (26) and the swivel axis (38) of which is disposed transversely to the air current.

4. Device according to Claim 3, characterised in that the flap (20) exhibits, at its area interacting with the one sub-intermediate duct (24), a section (45) offset in relation to the flap plane, which section, when the flap (20) butts against the partition (26), protrudes from the surface (44) of the flap (20) facing away from the partition (26).

5. Device according to Claim 4, characterised in that the section (45) protrudes, in relation to the remaining area of the flap (20), by about 30 degrees.

6. Device according to one of Claims 4 or 5, characterised in that the section (45) in the central area between the flap swivel axis (38) and the free end (46) of the flap (20) merges into the latter.

7. Device according to one of Claims 4 to 6, characterised in that the protruding section (45) of the flap (20) is connected to the latter by a cover plate (48).

8. Device according to Claim 7, characterised in that the cover plate (48) is located in an extension plane of the partition (26).

9. Device according to one of Claims 1 to 8, characterised in that a stop shoulder (52, 54) located in the area of the branch duct (34) is assigned to the guide element (20), in its operating position separating the branch duct (34) from the main duct (18).

10. Device according to Claim 9, characterised in that a stop shoulder (52 or 54) is in each case assigned both to the free end (56) of the offset section (45) of the flap (20) and to the free end (46) of the remaining area (40) of the flap.

11. Device according to one of Claims 1 to 10, characterised in that the blower nozzle (32) is directed towards at least one of the front seats of the motor vehicle.

**Revendications**

1. Dispositif pour chauffer l'intérieur d'un véhicule, avec un canal principal (18) parcouru par de l'air, un canal intermédiaire (22, 24) branché à la suite de ce dernier, duquel se détachent des canaux latéraux (28, 30) reliés à l'intérieur du véhicule, avec un canal de dérivation (34) conduisant du canal principal (18) sur un échangeur thermique (36), qui peut être mis en communication avec le canal principal et isolé de celui-ci à l'aide d'un élément de guidage (20) pour l'air, mobile et pouvant être bloqué entre deux positions extrêmes et qui arrive, vu dans le sens du flux d'air dans le canal intermédiaire (22, 24) derrière l'échangeur thermique (36), le canal intermédiaire (22, 24) étant relié à une buse de soufflage (32) débouchant dans l'intérieur du véhicule, et ce canal intermédiaire (22, 24) étant divisé en deux parties, dont un premier canal intermédiaire partiel (24) se trouve en liaison avec la buse de soufflage (32) et un autre canal intermédiaire partiel (22) se transforme en canaux latéraux (28, 30), dispositif caractérisé en ce que l'élément de guidage (20) dans une position de service reliant le canal de dérivation (34) au canal principal (18) maintient ouvert un passage (50) vers l'un des canaux partiels (24) et obture l'autre canal partiel (22).

2. Dispositif selon la revendication 1, caractérisé en ce que le canal intermédiaire (22, 24) comporte une paroi de séparation (26) dirigée dans le sens de flux de l'air pour constituer les deux canaux intermédiaires partiels (22 ou 24), paroi qui s'étend jusqu'à la zone de déplacement de l'élément de guidage (20).

3. Dispositif selon l'une des revendications 1 ou 2, caractérisé en ce que l'élément de guidage est réalisé sous forme d'un volet (20) pouvant pivoter et butant dans une de ses positions extrêmes contre la paroi de séparation (26), volet dont l'axe de pivotement (38) est placé transversalement par rapport au flux d'air.

4. Dispositif selon la revendication 3, caractérisé en ce que le volet (20) comporte sur sa zone coopérant avec un canal intermédiaire partiel (24) un segment (45) décalé par rapport au plan du volet, qui fait saillie à partir de la face (44) du volet (20) située à l'opposé de la paroi de séparation (26), lorsque le volet (20) est en butée contre la butée de séparation (26).

5. Dispositif selon la revendication 4, caractérisé en ce que le segment (45) forme une saillie d'environ 30° par rapport à la zone restante du volet (20).

6. Dispositif selon l'une des revendications 4 ou 5, caractérisé en ce que le segment (45) dans le zone centrale entre l'axe de pivotement du volet (38) et l'extrémité libre (45) du volet (20) se transforme en celui-ci.

7. Dispositif selon l'une des revendications 4 à 6, caractérisé en ce que le segment (45) en saillie du volet (20) est relié à celui-ci par une plaque de recouvrement (48).

8. Dispositif selon la revendication 7, caractérisé en ce que la plaque de recouvrement (48) se trouve dans un plan en prolongement de la paroi de séparation (26).

9. Dispositif selon l'une des revendications 1 à 8, caractérisé en ce qu'à l'élément de guidage (20) dans sa position de marche séparant le canal de dérivation (34) du canal principal (18), est associé un épaulement de butée (52, 54) se trouvant dans la zone du canal de séparation (34).

10. Dispositif selon la revendication 9, caractérisé en ce qu'à l'extrémité libre (56) du serpent (45) décalé du volet (20) tout comme à l'extrémité libre (46) de la zone (40) restante du volet est associé à chacune d'elle un épaulement de butée (52 ou 54).

11. Dispositif selon l'une des revendications 1 à 10, caractérisé en ce que la buse de soufflage (32) est dirigée au moins vers un des sièges avant du véhicule.

FIG. 1

FIG. 2

FIG. 3

FIG. 4

FIG. 5

FIG. 6